# EUROPEAN PATENT SPECIFICATION

(11) **EP 3 726 766 B1**
(45) Date of publication and mention of the grant of the patent: **06.12.2023**
(21) Application number: 19751040.7
(22) Date of filing: 29.01.2019
(51) Int. Cl.: H04L 5/00, H04B 7/14, H04B 7/06

(54) **METHOD AND APPARATUS FOR CONFIGURING REFERENCE SIGNAL**
VERFAHREN UND VORRICHTUNG ZUR KONFIGURATION EINES REFERENZSIGNALS
PROCÉDÉ ET APPAREIL DE CONFIGURATION DE SIGNAL DE RÉFÉRENCE

(30) Priority: 09.02.2018 CN 201810135167
(43) Date of publication of application: 21.10.2020
(73) Proprietor: HUAWEI TECHNOLOGIES CO., LTD., Shenzhen, Guangdong 518129 (CN)
(72) Inventor: LIU, Fengwei, Shenzhen, Guangdong 518129 (CN); CHEN, Lei, Shenzhen, Guangdong 518129 (CN); QIU, Jing, Shenzhen, Guangdong 518129 (CN); TANG, Xiaoyong, Shenzhen, Guangdong 518129 (CN)
(74) Representative: Thun, Clemens
(86) International application number: PCT/CN2019/073747
(87) International publication number: WO 2019/154193

(56) References cited:
- EP-A1- 3 633 884
- CN-A- 106 982 084
- CN-A- 107 659 947
- US-A1- 2010 323 612
- US-A1- 2017 339 662
- RESEARCH IN MOTION ET AL: "Configurations of Transparent Relay using Rel-9 Dual-Layer Beamforming", 3GPP DRAFT; R1-092414(RIM-TRANSPARENT RELAY USING DUAL-LAYER BF), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050350928, [retrieved on 2009-06-24]
- Samsung: "Cross-Link Interference Management Based on Coordinated Beamforming", 3GPP TSG RAN WG1 Meeting NR#3, R1-1716036, 21 September 2017 (2017-09-21), XP051339495,
- Huawei et al.: "On CLI Measurement and Power Control for Cross-Link Interference Mitigation", 3GPP TSG RAN WG1 Meeting #88bis, R1-1704255, 7 April 2017 (2017-04-07), XP051242407,

## Description

### TECHNICAL FIELD

This application relates to the field of communications technologies, and in particular, to a method, an apparatus, and a system for configuring a reference signal.

### BACKGROUND

Currently, to improve communication reliability and quality in a communications system, a base station measures inter-cell interference by configuring a zero power CSI-RS (zero power CSI-RS, ZP-CSI-RS, channel state information-reference signal, CSI-RS) for user equipment (user equipment, UE). Alternatively, the base station measures interference in a cell or in a base station coordination cluster by configuring a non-zero power CSI-RS (non zero power CSI-RS, NZP-CSI-RS) for the UE.

Backhaul links are introduced in a new radio (new radio, NR) communications system, and there is mutual interference between the backhaul links. Specifically, a backhaul link is a link between relay nodes. However, a manner for configuring a signal, for example, a ZP-CSI-RS or an NZP-CSI-RS, used for interference measurement in the prior art cannot be applied to a scenario in which a relay node measures signal interference between the backhaul links.

In conclusion, the manner for configuring the signal, for example, the ZP-CSI-RS or the NZP-CSI-RS, used for the interference measurement in the prior art cannot be applied to the scenario in which the relay node measures the signal interference between the backhaul links.

For example, US 2010/323612 A1 refers to a system and method for usage in a communication system that includes at least one base station and at least one relay node (RN) for communicating with a user agent (UA), the system comprising a base station that includes a processor and an antenna assembly capable of simultaneously transmitting at least first and second layer base station beams to the UA and a relay node (RN) that includes a processor and an antenna assembly capable of simultaneously transmitting at least first and second layer RN beams to the UA, wherein the first base station beam and first RN beam superpose on each other during transmission and the second base station beam and second RN beam superpose on each other during transmission, so that the RN is transparent to the UA.

Further, EP 3 633 884 A1 refers to a signal transmission method. The method may include: receiving, by a first device, reference configuration information for a signal resource sent by a second device, where the reference signal is used to measure interference between a first link and a second link, the first link is a link between the first device and a fourth device, the second link is a link between the second device and a third device, and the first device and the second device are relay nodes between the third device and the fourth device; and sending or receiving, by the first device, a reference signal on a reference signal resource indicated by the resource configuration information for the signal resource.

### SUMMARY

This application provides a method, an apparatus, and a system for configuring a reference signal, to resolve a technical problem in the prior art that signal interference between backhaul links cannot be measured. The above mentioned problem is solved by the subject matter of the independent claims. Further implementation forms are provided in the dependent claims.

In a first aspect a method for configuring a reference signal performed by a first node in a radio relay system is provided, the radio relay system including a base station, a first user equipment, UE, served by the base station, relay nodes, and second UEs served by the relay nodes,
o wherein:
   ▪ the first node is the base station, the first node is connected to the first UE by an access link,
   ▪ a second node, being a relay node among the relay nodes, is connected to the first node by a wireless backhaul link and to one of the second LTEs by an access link, and
   ▪ a third node, being a further relay node among the relay nodes, is connected to the second node by a wireless backhaul link and to another one of the second UEs by an access link,
o wherein the first node is an upper-level node of the second node, wherein an upper level node of a node provides a service to said node,
wherein the method comprises the steps of:
**a.)** receiving first information from the second node, wherein the first information comprises beam information of beams used by the backhaul link between the second node and the third node; and
**b.)** sending configuration information to the second node, wherein the configuration information is used to indicate configuration information of a reference signal received or sent by the second node on a target beam, and the target beam is at least one of those beams used by the backhaul link between the second node and the third node, wherein the first information further comprises information about a further reference signal of at least one beam among those beams used by the backhaul link between the second node and the third node, wherein the configuration information of the reference signal received or sent by the second node on the target beam comprises information indicating that there is a quasi co-location, QCL, relationship between the reference signal received or sent by the second node on the target beam and the further reference signal of the at least one beam.

According to the method, the first node can configure the second node. The reference signal between the second node and the third node is received or sent, and interference measurement on a backhaul link between the second node and the third node can be performed based on the reference signal that is sent by the third node and that is received by the second node, or based on the reference signal sent by the second node to the third node.

In a first implementation form of the first aspect, those beams used by the backhaul link between the second node and the third node comprises: a transmit beam used by the second node to send information to the third node, or a receive beam used by the second node to receive information sent by the third node.

In a second implementation form of the first aspect, the beam information of the beams used by the link between the second node and the third node may be at least one piece of the following information: a beam number, an identifier of a sending node of one of the beams, an identifier of a receiving node of one of the beams, a beam index, or a quantity of the beams used by the link between the second node and the third node. The foregoing beam information can be used to identify the beams used by the link between the second node and the third node.

In a second aspect of the invention, a method for configuring a reference signal performed by a second node in a radio relay system is provided, the radio relay system including a base station, a first user equipment, UE, served by the base station, relay nodes, and second UEs served by the relay nodes,
o wherein:
   ▪ a first node is the base station, the first node is connected to the first UE by an access link,
   ▪ the second node, being a relay node among the relay nodes, is connected to the first node by a wireless backhaul link and to one of the second UEs by an access link, and
   ▪ a third node, being a further relay node among the relay nodes, is connected to the second node by a wireless backhaul link and to another one of the second UEs by an access link,
   o wherein the first node is an upper-level node of the second node, wherein an upper level node of a node provides a service to said node,
      **a.)** sending first information to the first node, wherein the first information comprises beam information of beams used by the backhaul link between the second node and the third node;
      **b.)** receiving configuration information from the first node, wherein the configuration information is used to indicate configuration information of a reference signal received or sent by the second node on a target beam, the target beam is at least one of those beams used by the backhaul link between the second node and the third node; and
      **c.)** receiving or sending the reference signal on the target beam, wherein the first information further comprises information about a further reference signal of at least one beam among those beams used by the backhaul link between the second node and the third node, wherein the configuration information of the reference signal received or sent by the second node on the target beam comprises: information indicating that there is a quasi co-location, QCL, relationship between the reference signal received or sent by the second node on the target beam and the further reference signal of the at least one beam; and
         the receiving or sending the reference signal on the target beam comprises:
         o receiving or sending, on the target beam, the reference signal that has the quasi co-location, QCL, relationship with the further reference signal of the at least one beam.

In a first implementation form of the second aspect those beams used by the backhaul link between the second node and the third node comprises: a transmit beam used by the second node to send information to the third node, or a receive beam used by the second node to receive information sent by the third node.

In a second implementation form of the second aspect the beam information of those beams used by the backhaul link between the second node and the third node comprises at least one piece of the following information: information about a beam number; an identifier of a sending node of one of those beams; an identifier of a receiving node of one of those beams; a beam index, wherein the beam index corresponds to the sending node of one of those beams, the receiving node of one of those beams, and the beam number; and a quantity of those beams used by the link between the second node and the third node.

In a third aspect a first node for configuring a reference signal is provided, the first node being configured to perform the method according to the first aspect or its implementation forms.

In a fourth aspect a second node for configuring a reference signal is provided, the second node being configured to perform the method according to the second aspect or its implementation forms.

In a fifth aspect a computer-readable storage medium is provided, wherein the computer-readable storage medium stores code; and when the code is invoked and executed by a computer of a first node, the computer performs the method according to the first aspect or its implementation forms.

In a sixth aspect a computer-readable storage medium is provided, wherein the computer-readable storage medium stores code; and when the code is invoked and executed by a computer of a second node, the computer performs the method according to the second aspect or its implementation forms.

In a seventh aspect a computer program product is provided, wherein when the computer program product is invoked and executed by a computer of a first node, the computer performs the method according to the first aspect or its implementation forms.

In an eighth aspect a computer program product is provided, wherein when the computer program product is invoked and executed by a computer of a second node, the computer performs the method according to the second aspect or its implementation forms.

### DESCRIPTION OF DRAWINGS

FIG. 1 is a schematic architectural diagram of a communications system to which a method for configuring a reference signal is applicable according to an embodiment of this application;
FIG. 2 is a schematic logic structural diagram of a first node for configuring a reference signal according to an embodiment of this application;
FIG. 3 is a schematic logic structural diagram of a second node for configuring a reference signal according to an embodiment of this application;
FIG. 4 is a schematic diagram of steps of a method for configuring a reference signal according to an embodiment of this application;
FIG. 5 is a schematic diagram of node distribution of a method for configuring a reference signal according to an embodiment of this application;
FIG. 6 is a schematic diagram of distribution of beams between a second node and a third node according to an embodiment of this application;
FIG. 7 is a schematic structural diagram of a system for configuring a reference signal according to an embodiment of this application;
FIG. 8 is a schematic structural diagram of a first node for configuring a reference signal according to an embodiment of this application; and
FIG. 9 is a schematic structural diagram of a second node for configuring a reference signal according to an embodiment of this application.

### DESCRIPTION OF EMBODIMENTS

To resolve a technical problem in the prior art that signal interference between backhaul links cannot be measured, embodiments of this application provide a method, an apparatus, and a system for configuring a reference signal. The method includes: determining, by a first node that serves as an upper-level node of a second node, first information, where the first information may include beam information of beams used by a link between the second node and a third node; and then sending, by the first node, configuration information to the second node, to indicate a reference signal received or sent by the second node on a target beam, where the target beam is at least one of the beams used by the link between the second node and the third node, so that the first node can indicate the second node to receive or send the reference signal based on the beams used by the link between the second node and the third node, so that interference caused by the link between the second node and the third node to another link or interference caused by another link to the link between the second node and the third node may further be measured.

The following explains some terms in this application.

The first node, the second node, and the third node may be communications nodes in a communications system. The first node is a base stationin a relay communications system, and the second node and the third node are relay nodes in the relay communications system, where the third node may further be UE accessing the relay communications system. In the embodiments of this application, the first node is a node that provides a service for another node in the communications system, for example, is a node that provides a service for the second node, that is, the upper-level node of the second node. In addition, the communications system in which the first node, the second node, and the third node are located may further include a fourth node. In an implementation, the fourth node may be a relay node in the relay communications system. The second node receives, on the target beam based on the configuration information sent by the first node, a reference signal sent by the fourth node. The first node may indicate, based on the beam information of the beams used by the link between the second node and the third node, the second node to receive, on the target beam, the reference signal sent by the fourth node, while the reference signal sent by the fourth node may be sent by the fourth node configured by the first node or another node.

The link between nodes is a wireless transmission link, that is, a path for transmitting information between the nodes by using a beam resource. Specifically, in the embodiments of this application, the second node and the third node are relay nodes in the relay communications system, and the link between the second node and the third node is a backhaul link in the relay communications system. In the embodiments of this application, the link between the nodes may alternatively be a link that has only a measurement function. For example, the link between the second node and the third node may be a link on which the second node sends a measurement signal and the third node measures interference.

A beam is a communication resource. The beam in the embodiments of this application may be a wide beam, a narrow beam, or a beam of another type. A technology for forming a beam may be a beam forming technology or another technical means. Specifically, the beam forming technology may be specifically a digital beam forming technology, an analog beam forming technology, or a hybrid digital or analog beam forming technology. Different beams may be considered as different communication resources, and same information or different information may be sent by using different beams. A plurality of beams that have same or similar communication features may be considered as one beam. One beam may include one or more antenna ports, configured to transmit data channels, control channels, and sounding signals. For example, a transmit beam may be distribution of signal strength formed in different spatial directions after a signal is transmitted by using an antenna, and a receive beam may be distribution of signal strength that is formed in different spatial directions and that is of a radio signal received from the antenna. It may be understood that, the one or more antenna ports forming one beam may also be considered as an antenna port set. In addition, the beam may be indicated by using information about the signal (which may be a configured reference signal, or the like). The information about the signal may be an identifier, an antenna port number, an index number, and the like of the signal, for example, an identifier of a reference signal, for example, an identifier and/or an antenna port number of a CSI-RS, an index number and/or an identifier of a synchronization signal (synchronization signal, SS)/physical broadcast channel (physical broadcast channel, PBCH) block (block), an identifier and/or an antenna port number of a sounding reference signal (sounding reference signal, SRS), an identifier of a tracking signal (tracking reference signal, TRS).

The transmit beam is a beam used when a sending node sends information to a receiving node in a wireless communications network, where the sending node is a node that sends the information, and the receiving node is a node that receives the information.

The receive beam is a beam used when the receiving node receives the information sent by the sending node in the wireless communications network.

The reference signal is a reference signal configured by the base station for the the relay device in the wireless communications system, to enable the another relay device within a coverage area of the base station to measure a downlink or uplink channel state. The relay device performs downlink or uplink channel estimation based on the reference signal. In implementation, the reference signal may be the CSI-RS, the SRS, or the like.

The configuration information may be configuration information of the reference signal sent by the base station to the relay device in the wireless communications system, and the configuration information may indicate the device to receive or send the reference signal. The configuration information includes information about the reference signal configured by the base station, for example, a quantity of antenna ports and number information that are used to receive or send the reference signal, a time-frequency resource occupied by the reference signal, or a time domain feature (periodic, semi-persistent, or aperiodic) of the reference signal. In addition, in implementation, the configuration information may be used to indicate the communications node to transmit the beam or receive the beam. Further the configuration information is used to indicate beam information of the beam used by the communications node to send or receive the reference signal by indicating a QCL (quasi co-location, QCL) relationship with the reference signal. In addition, the configuration information of the reference signal may further include information such as sequence information of the reference signal or the sending node of the reference signal. The beam information of the beam is information used to describe the beam. For example, the beam information may include at least one piece of the following information: sending node information of the beam, receiving node information of the beam, a beam index, and a beam number. A beam may be uniquely identified by using the beam information. The beam number may be a number of the transmit beam or the receive beam numbered by the node to which the beam belongs. For example, the base station numbers all transmit beams of the base station, so that information about the beam number can be used to uniquely identify a transmit beam. The beam index may be a number of a beam that is of another node and that is numbered by the node in the wireless communications system. For example, the base station in the wireless communications system separately numbers transmit beams and receive beams that are managed by all lower-level nodes within the coverage area of the base station, so that the transmit beams and the receive beams of all lower-level nodes of the base station within the coverage area of the base station can be uniquely identified based on the beam index.

The backhaul link is a link formed between an upper-level node (for example, the base station or the relay node) and a device that has a relay function, or between a device that has a relay function and another device that has the relay function in the relay network system. A concept relative to the backhaul link is an access link, and the access link is a link between a master node and UE accessing the master node, or the access link is a link between the device that has the relay function and UE accessing the device.

That there is a QCL relationship between two reference signals means that there is a QCL relationship between antenna port numbers of the two reference signals. That there is a QCL relationship between two antenna ports means that large-scale properties of a channel over which a symbol on one antenna port is conveyed may be inferred from large-scale properties of a channel over which a symbol on the other antenna port is conveyed. The large-scale properties of the channel include one or more of the following properties: a delay spread, a Doppler spread, a Doppler shift, an average gain, an average delay, and a spatial reception parameter. Both a reference signal of an NR and a reference signal of LTE carry the antenna port numbers. Therefore, the QCL relationship is usually established between reference signals. For example, the base station may configure one reference signal for the UE, and indicate that the reference signal has a QCL relationship of a type with the other reference signal, to assist the UE in determining a reception parameter or an emission parameter.

In the prior art, a beam indication may be implicit indication based on the QCL relationship between the reference signals. A method for indicating the receive beam by using the QCL relationship between the reference signals is as follows: When the UE is configured to receive a reference signal A, the reference signal A and a reference signal B may be configured to have a spatial QCL relationship. Usually, the reference signal B is a signal known to one UE (for example, sent by the base station). Therefore, the UE may receive the reference signal A by using a beam for receiving the reference signal B. A method for indicating the transmit beam by using the QCL relationship between the reference signals is as follows: When the UE is configured to send a reference signal A, the reference signal A and a reference signal B may be configured to have a spatial QCL relationship. For a transmit beam indication, there are two cases for the reference signal B. First, the reference signal B is a signal known to one UE (sent by the base station). Therefore, the UE may send the reference signal A by using the beam for receiving the reference signal B. Second, the reference signal B is another transmit signal of the UE. Therefore, the UE may send the reference signal A by using a beam for sending the reference signal B.

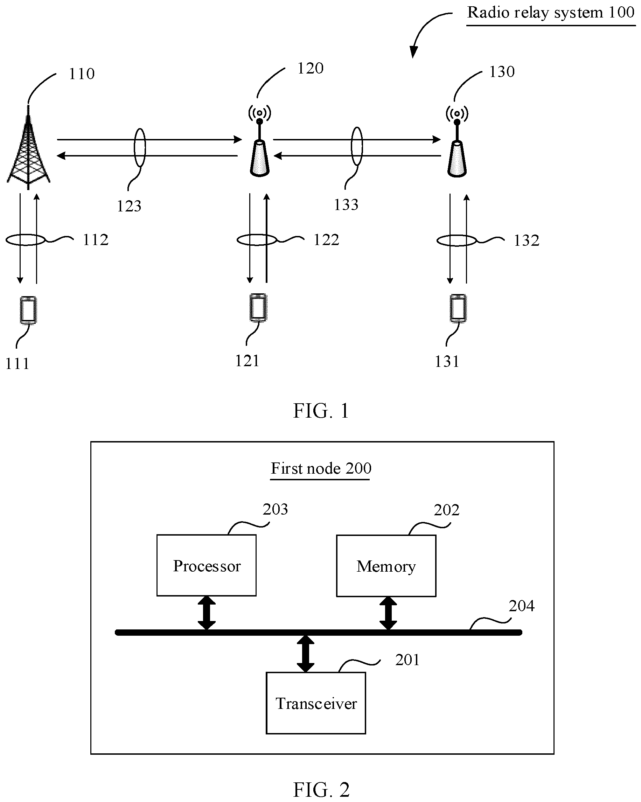

FIG. 1 is a radio relay system according to an embodiment of this application. It should be noted that, the radio relay system mentioned in the embodiments of this application includes but is not limited to: a narrowband Internet of Things (narrow band-internet of things, NB-IoT) system, a global system for mobile communications (global system for mobile communications, GSM), an enhanced data rate for GSM evolution (enhanced data rate for GSM evolution, EDGE, global system for mobile communication, GSM) system, a wideband code division multiple access (wideband code division multiple access, WCDMA) system, a code division multiple access 2000 (code division multiple access, CDMA 2000) system, and a time division-synchronization code division multiple access (time division-synchronization code division multiple access, TD-SCDMA) system, a long term evolution (long term evolution, LTE) system, a next-generation 5G mobile communications system (5th-generation, fifth-generation mobile communications system), a machine-to-machine (machine to machine, M2M) system, and the like.

As shown in FIG. 1, a radio relay system 100 at least includes a base station 110, at least one UE 111 served by the base station 110, one or more relay nodes an rTRP 120 and an rTRP 130, one or more UEs 121 served by the rTRP 120, and one or more UEs 131 served by the rTRP 130. The rTRP 120 is connected to the base station 110 by using a wireless backhaul link 123, the rTRP 130 is connected to the rTRP 120 by using a wireless backhaul link 133, the UE 111 is connected to the base station 110 by using an access link 112, the UE 121 is connected to the rTRP 120 by using an access link 122, and the UE 131 is connected to the rTRP 130 by using an access link 132. In a next-generation radio air interface, the base station 110 is usually referred to as a DgNB (donor gNB). The base station 110 includes but is not limited to: an evolved NodeB (evolved Node Base, eNB), a radio network controller (radio network controller, RNC), a NodeB (node B, NB), a base station controller (base station controller, BSC), a base transceiver station (base transceiver station, BTS), a home NodeB (home node B, home evolved dode B, HNB), a baseband unit (base band Unit, BBU), a next-generation new radio NR base station (such as a gNB), and the like.

The base station 110 in the radio relay system shown in FIG. 1 is used as a first node in this embodiment of this application. The rTRP 120 is used as another device that has a relay function as a lower-level node. A second node has the relay function in the lower-level node of the first node, i.e. the rTRP 120 or the rTRP 130 shown in FIG. 1. In the invention, the rTRP 120 shown in FIG. 1 is used as the second node.

As shown in FIG. 2, a first node 200 in the embodiments of this application may include a transceiver 201, a memory 202, and a processor 203. The transceiver 201 is configured to interact with a second node 300, the memory 202 may be configured to store code that needs to be executed by the processor 203, and the processor 203 may be a general-purpose central processing unit (central processing unit, CPU), a microprocessor, an application-specific integrated circuit (application specific integrated Circuit, ASIC), or one or more integrated circuits, and is configured to perform a related operation based on the code stored in the memory 202, to implement technical solutions provided in the embodiments of this application. In implementation, the transceiver 201, the memory 202, and the processor 203 may be connected to each other by using a bus structure 204.

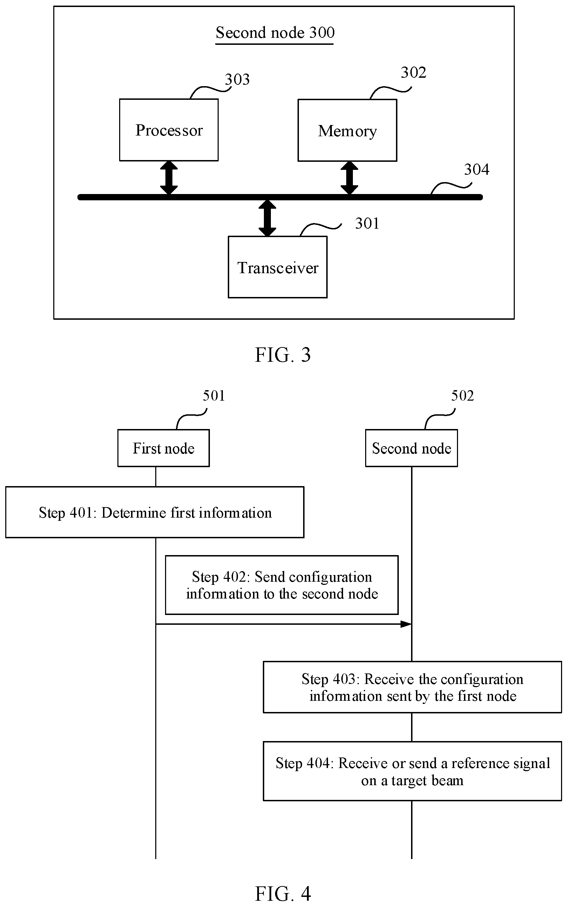

As shown in FIG. 3, a second node 300 in the embodiments of this application includes a transceiver 301, a memory 302, and a processor 303. The transceiver 301 is configured to interact with a first node 200, the memory 302 may be configured to store code that needs to be executed by the processor 303, and the processor 303 may be a general-purpose central processing unit, a microprocessor, an application-specific integrated circuit, or one or more integrated circuits, and is configured to perform a related operation based on the code stored in the memory 302, to implement technical solutions provided in the embodiments of this application. In implementation, the transceiver 301, the memory 302, and the processor 303 may be connected to each other by using a bus structure 304.

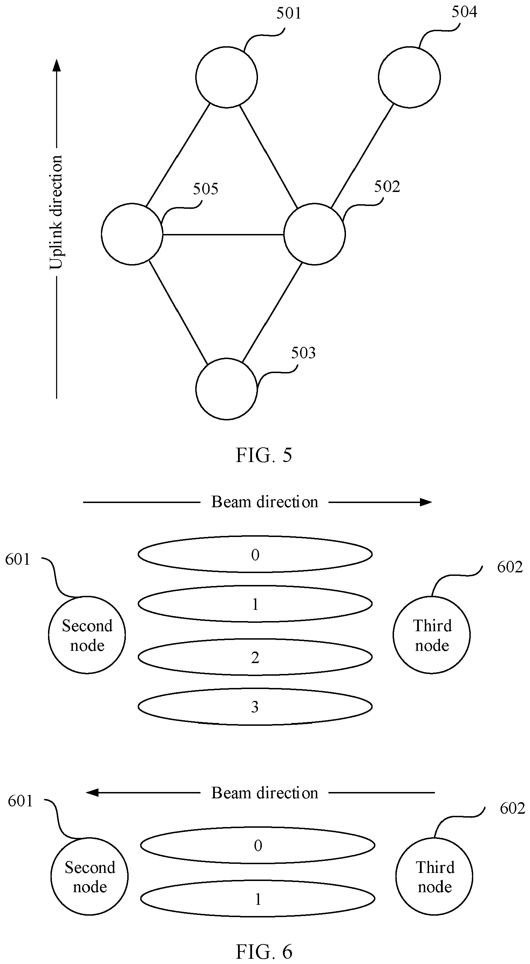

FIG. 4 is a schematic diagram of steps of a method for configuring a reference signal according to an embodiment of the present invention. In the method, a first node and a second node implement configuration of a reference signal. As shown in FIG. 5, a first node 501 is the upper-level node of a second node 502 in a wireless communications system, and the wireless communications system shown in FIG. 5 further includes a third node 503. Specifically, the method includes the following steps:
S401: The first node determines first information, where the first information includes beam information of beams used by a link between the second node and the third node.
S402: The first node sends configuration information to the second node, where the configuration information is used to indicate configuration information of a reference signal received or sent by the second node on a target beam, and the target beam is at least one of the beams used by the link between the second node and the third node.
S403: The second node receives the configuration information sent by the first node.
S404: The second node receives or sends the reference signal on the target beam.

According to the foregoing steps, the first node can configure, based on the determined first information, the second node to receive or send the reference signal on the target beam, where the target beam is at least one of the beams that are indicated by the first information and that are used by the link between the second node and the third node. Therefore, according to the solution, the first node in the wireless communications system can configure the second node, namely, a lower-level relay node, to receive or send the reference signal on a beam between the second node and another relay node, so that the second node can perform interference measurement based on the received or sent reference signal, and a relay node can perform the interference measurement between backhaul links.

It should be noted that, in this application, that the reference signal is sent by the second node to the third node, or the reference signal is sent by the third node to the second node is not limited, but the second node is only required to receive or send the reference signal by using the target beam. For example, the reference signal received by the second node may be sent by a fourth node.

In the invention, the first node 501 needs to measure interference between the second node 502 and a lower-level node 503 of the second node by configuring the reference signal, the lower-level node 503 may be used as the third node in this embodiment of this application.

In step 401, the beams used by the link between the second node and the third node may be transmit beams used by the second node to send information to the third node, so that the first information determined by the first node may include beam information of the transmit beams used by the second node to send the information to the third node; or the beams used by the link between the second node and the third node may be receive beams used by the second node to receive information sent by the third node, so that the first information determined by the first node may include beam information of the receive beams used by the second node to receive the information sent by the third node.

In implementation, after receiving the configuration information, the second node may send the configuration information to the third node, so that the third node receives the reference signal based on the configuration information, or the third node sends the reference signal based on the configuration information. For example, if the first information is information about the receive beams used by the second node to receive the information sent by the third node, the configuration information sent by the first node to the second node may be used to indicate the reference signal received by the second node on the target beam, where the target beam is at least one of the receive beams used by the second node to receive the information sent by the third node. The second node may send the configuration information to the third node after receiving the second configuration information, so that the third node sends the reference signal to the second node based on the configuration information.

In an implementation, the first node determines, based on the first information, the configuration information sent to the second node in step 402. Specifically, the first node may determine, based on the beam information that is included in the first information and that is of the beams used by the link between the second node and the third node, the beams used by the link between the second node and the third node, use at least one of the determined beams as the target beam, and generate the configuration information used to indicate the second node to receive or send the reference signal on the target beam.

In an implementation, the beam information of the beams used by the link between the second node and the third node may be at least one piece of the following information: a beam number, an identifier of a sending node of one of the beams, an identifier of a receiving node of one of the beams, a beam index, or a quantity of the beams used by the link between the second node and the third node.

In implementation, the beam number may be information about numbers used to identify the transmit beams or the receive beams. For example, the second node sorts and numbers all the transmit beams pointed by the second node to the third node in advance, so that the transmit beams can be uniquely identified only based on the beam numbers. If the first information determined by the first node includes the numbers of the transmit beams used by the second node to send information to the third node, the first node may add one or more beam numbers to the configuration information, so that the second node can use a beam to which the beam number in the configuration information belongs as the target beam, to implement the indication of the target beam.

As shown in FIG. 6, if first information determined by a first node includes that beam numbers of a plurality of transmit beams used by a second node 601 to send information to a third node 602 are respectively 0, 1, 2, and 3, the first node may add a beam number 3 to the configuration information, and the configuration information is used to indicate the second node to send the reference signal by using a beam of which the beam number is 3 as the target beam.

In implementation, the beam information of the beams used by the link between the second node and the third node may further include information about a sending node and/or a receiving node of one of the beams. If the beam is a transmit beam used for sending information, an identifier of the sending node of the beam may be an identifier of a node that sends information by using the transmit beam, and an identifier of the receiving node of the beam may be an identifier of a node that receives the information. If the beam is a receive beam, the receiving node of the beam may be a node that receives information by using the receive beam, and the sending node of the beam may be a node that sends the information. The identifier of the node may be an identifier (identity, ID) of the node, the node ID may be an inherent ID of the node or an ID allocated by a network to the node, and the node ID includes but is not limited to a physical cell ID, a radio network temporary identifier (radio network temporary identity, RNTI), and the like. The first node may determine, based on the information about the sending node of the beam and/or the receiving node of the beam, the backhaul link to which the beam belongs, and determine whether the beam is a transmit beam of the second node or a receive beam of the second node. In this way, the sending node and/or the receiving node of the beam may be pertinently indicated to pertinently measure interference of the backhaul link by receiving or sending the reference signal by the beam.

FIG. 6 is still used as an example. If first information determined by a first node further includes that beam numbers of a plurality of receive beams used by a second node 601 to receive information sent by a third node 602 are respectively 0 and 1, the first node may add, to the configuration information, a beam number 0, information indicating that a sending node of a beam is the second node 601, and information indicating that a receiving node of the beam is the third node 602, so that after receiving the configuration information, the second node 601 can use a transmit beam of which the number is 0 and that is used by the second node 601 to send information to the third node 602 as a target beam, to send the reference signal.

In implementation, after the first node determines that the beam numbers of the plurality of transmit beams used by the second node 601 to send the information to the third node 602 are respectively 0, 1, 2, and 3, and the beam numbers of the plurality of receive beams used by the second node 601 to receive the information sent by the third node 602, a correspondence table, shown in Table 1, between a beam number and a sending node of a beam and a receiving node of a beam may be determined.

**Table 1**

| Beam number | Sending node of a beam | Receiving node of a beam |
|---|---|---|
| 0 | Second node | Third node |
| 1 | Second node | Third node |
| 2 | Second node | Third node |
| 3 | Second node | Third node |
| 0 | Third node | Second node |
| 1 | Third node | Second node |

According to Table 1, if the first node needs to indicate the second node to send the reference signal to the third node based on the beam of which the beam number is 1, the first node may add, to the configuration information, the beam number 1, the information indicating that the sending node of the beam is the second node, and the information indicating that the receiving node of the beam is the third node.

The beam information of the beams used by the link between the second node and the third node may further include a beam index. The beam index may be beam indexes of all beams between the second node and the third node, and can be used to uniquely identify all beams between the second node and the third node. In specific implementation, the beam index may be a number, or may be other identification information that can uniquely identify the beam.

In implementation, a correspondence between a beam index and a sending node of a beam, a receiving node of a beam, and the beam number may be stored in the first node and the second node. For example, the second node determines the foregoing correspondence and sends the correspondence to the first node, or the first node determines the foregoing correspondence and delivers the correspondence to the second node. In this case, after determining the first information, the first node may add a beam index of the target beam to the configuration information. After knowing the foregoing correspondence, the second node may determine, based on the foregoing correspondence, the sending node, the receiving node, and the beam number that are of the target beam and that correspond to the beam index, and then receive or send the reference signal by using the determined target beam.

FIG. 6 is still used as an example. After the first node determines that the beam numbers of the plurality of transmit beams used by the second node 601 to send the information to the third node 602 are respectively 0, 1, 2, and 3, and the beam numbers of the plurality of receive beams used by the second node 601 to receive the information sent by the third node 602, a beam index table shown in Table 2 may be formulated, and is used to store the correspondence table between the beam index and the sending node of the beam, the receiving node of the beam, and the beam number.

**Table 2**

| Beam index | Beam number | Sending node of a beam | Receiving node of a beam |
|---|---|---|---|
| 0 | 0 | Second node | Third node |
| 1 | 1 | Second node | Third node |
| 2 | 2 | Second node | Third node |
| 3 | 3 | Second node | Third node |
| 4 | 0 | Third node | Second node |
| 5 | 1 | Third node | Second node |

According to Table 2, if the first node needs to indicate the second node to send the reference signal to the third node based on the beam of which the beam number is 1, the first node may add the beam index 1 to the configuration information. When Table 2 is known, the second node may determine the target beam based on the beam index 1 in the configuration information.

The beam information of the beams used by the link between the second node and the third node may further include a quantity of the beams used by the link between the second node and the third node. The quantity of the beams used by the link between the second node and the third node may be a quantity of transmit beams used by the second node to send information to the third node, and/or a quantity of receive beams used by the second node to receive information sent by the third node. Alternatively, the beam information may include a quantity of transmit beams used by the third node to send information to the second node, and/or a quantity of receive beams used by the third node to receive information sent by the second node. If both the first node and the second node number the beams based on a same numbering rule, for example, based on a protocol definition or a signaling interaction rule, the sending node numbers the transmit beams from zero, and the receiving node numbers the receive beams from zero, the first node and the second node can obtain a same quantity of beam numbers based on a same quantity of beams. Therefore, the first node only needs to add, to the configuration information, a beam number obtained based on the foregoing numbering rule, and the second node can implement configuration of the reference signal by using a beam corresponding to the beam number as the target beam, so that the first node only needs to know the beam number, and does not need to know the beam corresponding to the beam number. Provided that the second node knows the beam corresponding to the beam number, the configuration of receiving or sending the reference signal can be implemented. When the third node needs to be configured to send or receive the reference signal in a direction of the beams of the link between the second node and the third node, the configuration information may be sent by the first node to the second node, and forwarded by the second node to the third node.

For example, if the first node determines that a quantity of transmit beams used by the second node to send information to the third node is 4, the second node separately numbers the transmit beams from 0 to 3 based on the numbering rule. In addition, when the first node knows that beam numbers of the transmit beams include transmit beams 0 to 3, the first node may add the beam number of the target beam to the configuration information. In this case, even if the beam information determined by the first node does not include the correspondence between a beam number and a beam, in other words, the first node actually cannot determine which transmit beam is specifically the transmit beam numbered 0, and only knows that the transmit beams used by the second node to send the information to the third node includes the transmit beam numbered 0. The second node can still determine, based on the existing numbering rule, a beam to which the beam numbered 0 in the configuration information belongs, so that the beam numbered 0 is used as the target beam used for sending the reference signal.

In a possible implementation, the beam information of the beams in this application may further include antenna port information, transport layer information, and data stream information. For example, the first information may include antenna port information of the link between the second node and the third node.

In a feasible implementation, the first information determined by the first node in step 401 includes information indicating that there is a quasi co-location QCL relationship between the reference signal received or sent by the second node on the target beam and a reference signal of at least one beam, for example, if the first information includes an identifier and/or configuration information of a configured reference signal of the second node, after the foregoing configuration information is determined, the configuration information sent by the first node to the second node is used to indicate that there is a QCL relationship between the reference signal received or sent by the second node on the target beam and the configured reference signal. Therefore, after receiving the configuration information, the second node may receive or send the reference signal on the target beam that has a QCL relationship with the configured reference signal.

Specifically, the first information includes information about the reference signal of the at least one beam known to the second node. The reference signal is used for transmission between the second node and the third node, and the reference signal has a QCL relationship with a remaining signal transmitted by the second node and the third node. First, transmission from the second node to the third node is considered. For example, a beam used to send a CSI-RS reference signal is configured between the second node and the third node, and the CSI-RS reference signal is denoted as CSI-RS_n1. After the second node reports the reference signal to the first node, and when configuring sending of the reference signal, the first node indicates that the configured reference signal has a QCL relationship with the CSI-RS_n1. After receiving the foregoing configuration, the second node sends, by using a direction of a beam for sending the CSI-RS_n1, the reference signal configured by the first node. When configuring receiving of the reference signal, the first node may indicate that a newly configured reference signal has a QCL relationship with the CSI-RS_n1. After receiving the foregoing configuration, the third node receives, by using a direction of a beam for receiving the CSI-RS_n1, the reference signal configured by the first node, and the reference signal may be sent by the fourth node. In addition, transmission from the third node to the second node is considered. In this case, the transmit beams may be determined by using a reference signal SRS of the third node, or may be determined by using a reference signal such as a synchronization signal block (synchronization signal block, SSB) of the second node, for example, SRS_m1 and SSB_l1. After the second node reports the reference signal (the SRS_m1 or the SSB_l1), when configuring sending of the reference signal, the first node may indicate that the configured reference signal has a QCL relationship with the SRS_m1 or the SSB_l1. In this case, the third node sends, in a direction of sending the SRS_m1 or a direction of receiving the SSB_l1, the reference signal configured by the first node. When configuring receiving of the reference signal, the first node indicates that the configured reference signal has a QCL relationship with the SRS_m1 or the SSB_l1. In this case, the second node receives, in a direction of receiving the SRS_m1 or in a direction of sending the SSB_l1, the reference signal configured by the first node. In the foregoing examples, the configuration of the third node performed by the first node may be forwarded by the second node to the third node.

In the following table, an identifier of a reference signal is merely used as an example. In practice, the reference signal may be identified by using information such as an SSB/PBCH block index (block index), a CSI-RS resource number, an SRS resource number, and an antenna port number of the reference signal. In addition, a sending node and/or a receiving node of the reference signal may further need to be indicated.

**Table 3**

| Sending node of a beam | Receiving node of a beam | Identifier of a reference signal |
|---|---|---|
| Second node | Third node | SSB_k1 |
| Second node | Third node | S SB_k2 |
| Second node | Third node | CSI-RS_n1 |
| Second node | Third node | CSI-RS_n1 |
| Third node | Second node | SRS_m1 |
| Third node | Second node | SSB_l1 |

According to Table 3, the first node may add an identifier (for example, the SSB_k2) of a known signal to the configuration information, and indicate that the reference signal sent by the second node has a QCL relationship with the SSB_k2. In this case, the second node sends the reference signal by using a beam for sending the SSB_k2.

In addition, according to Table 3, the first node may add the identifier SSB_l1 of the reference signal to the configuration information, to indicate the second node to receive the reference signal on the target beam. In this case, the direction of the beam for receiving the reference signal by the second node is the same as the direction of the beam for sending the SSB_l1 by the second node, that is, the SSB_l1 and the reference signal identified as SSB_l1 has a QCL relationship.

In addition, after determining information about the reference signal of at least one of the beams used by the link between the second node and the third node, the first node may further determine a correspondence table of a beam index and a configured reference signal, a sending node of a beam, a receiving node of a beam, and a beam number.

In the invention, first information determined by the first node in step 401 is reported by the second node.

In implementation, the step of reporting the first information by the second node may be triggered by the first node. For example, the first node may send the first message to the second node, and after receiving the first message, the second node uses beam information of at least one beam between the second node and the third node as the first information and reports the beam information to the first node. After receiving the first message, the second node may further report, to the first node, beam information of beams used by a link between the second node and all other nodes.

In addition, in implementation, after the beam information of the beams used by the link between the second node and the third node changes, the second node may report, to the first node, the beam information that changes and that is of the beams, or after the beam information of the beams used by the link between the second node and the third node changes, the second node reports, to the first node, changed beam information of the beams used by the link between the second node and the third node. For example, after numbers of the beams used by the link between the second node and the third node change, the second node may report the first information to the first node.

In another example not forming part of the invention, the first information in step 401 may be determined by the first node in a pre-configuration manner. For example, beam information of some or all beams between the second node and the third node is pre-configured to the first node; or beam information of some or all beams between the second node and all other neighboring nodes may be configured to the first node, so that the first node may determine the first information based on pre-configuration.

In step 402, the configuration information sent by the first node to the second node may be further used to enable the second node to send an indicated reference signal. The reference signal may be a reference signal that is defined in an NR, for example, a reference signal such as the CSI-RS or the SRS, or may be a newly defined reference signal.

When configuring the second node or the third node to receive the reference signal, the first node may configure the second node or the third node to measure a reference signal receiving power (reference signal receiving power, RSRP) of the reference signal, or may use the reference signal as an NZP-CSI-RS for interference measurement or a ZP-CSI-RS for interference measurement, measurement of receiving the reference signal is not specifically limited in this application. When a node is configured to measure the RSRP of the reference signal, a result obtained through measurement may be reported to the first node. When the reference signal is configured as the NZP-CSI-RS for the interference measurement or the ZP-CSI-RS for the interference measurement, the first node may simultaneously notify configuration information such as a time-frequency resource of an interference signal corresponding to the reference signal, and the second node or the third node may calculate information such as a signal to interference plus noise ratio (signal to interference plus noise ratio, SINR)/channel quality indicator (channel quality indicator, CQI) based on the reference signal, where the information may be reported to the first node, or may not be reported.

FIG. 6 is used as an example to describe an implementation of a method for configuring a reference signal provided in an embodiment of the present invention with reference to Embodiment 1, Embodiment 2, and Embodiment 3.

### Embodiment 1

As shown in FIG. 6, a correspondence between a beam number determined by the second node 601 and a sending node of a beam and a receiving node of a beam is shown in Table 1. The second node 601 uses Table 1 as the first information and reports the first information to the first node. After receiving the first information, the first node determines a correspondence between a beam index and a beam number, a sending node of a beam, and a receiving node of a beam, to obtain the correspondence table shown in Table 2, and the correspondence table is used to determine the configuration information. The first node may send Table 2 to the second node 601. If the first node needs to indicate the second node 601 to send the CSI-RS by using the transmit beam of which the beam number is 3, the first node may add the beam index 3 to the configuration information, and the second node 601 can determine, based on Table 2 and the beam index in the configuration information, that the target beam indicated by the configuration information is the transmit beam of which the beam number is 3 and that is used by the second node 601 to send the information to the third node 602, so that the second node 601 may use the transmit beam as the target beam to send the CSI-RS.

### Embodiment 2

As shown in FIG. 6, a correspondence between a beam number determined by the second node 601 and a sending node of a beam and a receiving node of a beam is shown in Table 1. The second node 601 reports the first information to the first node. If the first node knows the numbering rule of the beam of the second node 601, the first information may be information indicating that a quantity of transmit beams used by the second node 601 to send the information to the third node 602 is 4, and information indicating that a quantity of receive beams used by the second node 601 to receive the information sent by the third node 602 is 2. Therefore, the first node can determine, based on the numbering rule that is of the beam of the second node 601 and that is known to the first node, that beam numbers of the transmit beams used by the second node 601 to send the information to the third node 602 are 0 to 3, and the first node can determine that beam numbers of the receive beams used by the second node 601 to receive the information sent by the third node 602 are 0 and 1. Then, the first node may add, to the configuration information, the beam number 3, information indicating that the sending node of the beam is the second node 601, and information indicating that the receiving node of the beam is the third node 602, to indicate the second node 601 to send the CSI-RS by using the beam of which the beam number is 0. After receiving the configuration information, the second node 601 may send the CSI-RS based on the beam of which the beam number is 3 in Table 1.

### Embodiment 3

As shown in FIG. 6, a correspondence between a beam number of the second node 601, a sending node of a beam, a receiving node of a beam, and an identifier of a configured reference signal is shown in Table 4. The second node 601 may use the correspondence shown in Table 3 as the first information and report the first information to the first node.

**Table 4**

| Beam number | Sending node of a beam | Receiving node of a beam | Identifier of a reference signal |
|---|---|---|---|
| 0 | Second node | Third node | SSB_k1 |
| 1 | Second node | Third node | SSB_k2 |
| 2 | Second node | Third node | CSI-RS_n1 |
| 3 | Second node | Third node | CSI-RS_n1 |
| 0 | Third node | Second node | SRS_m1 |
| 1 | Third node | Second node | SSB_l1 |

If the first node needs to indicate the second node 601 to send the CSI-RS to the third node 602 by using the transmit beam of which the beam number is 3, the first node may add the identifier CSI-RS_n1 of the reference signal to the configuration information, and may further add information indicating that the second node 601 is the sending node and information indicating that the second node 602 is the receiving node. In this case, after receiving the configuration information, the second node 601 sends the CSI-RS that has a QCL relationship with the CSI-RS_n1 reference signal.

Based on a concept the same as that of the foregoing method embodiments, an embodiment of this application further provides a first node for configuring a reference signal. The first node includes a transceiver, a memory, and a processor, to complete the method related to the first node in the foregoing method embodiments or any one of possible implementations of the method embodiments.

In the embodiments of this application, the first node may be divided into function modules based on the foregoing method examples. For example, function modules may be divided by using corresponding functions, or two or more functions may be integrated into one processing module. The foregoing integrated module may be implemented in a form of hardware, or may be implemented in a form of a software function module. It should be noted that, in the embodiments of this application, module division is merely an example, and is merely a logical function division. In an actual implementation, another division manner may be used.

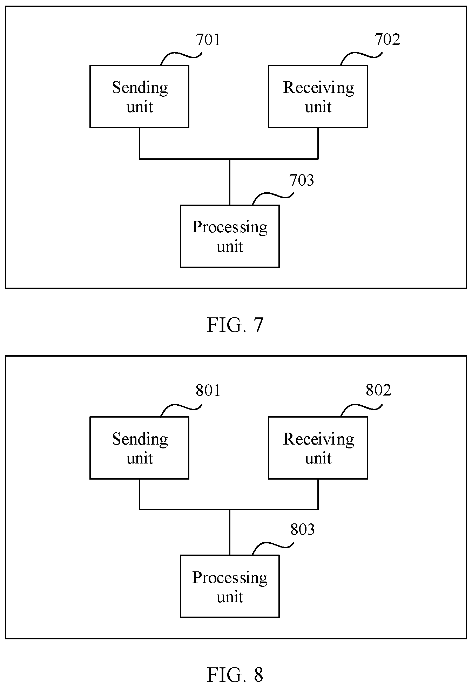

When the function modules is divided by using corresponding functions, FIG. 7 is a possible schematic structural diagram of a first node in the foregoing embodiments. The first node includes a sending unit 701 and a receiving unit 702. The sending unit 701 is configured to support the first node in performing the step of sending information by the first node device in this embodiment. The receiving unit 702 is configured to support the first node in performing the step of receiving information by the first node device in this embodiment. Optionally, the first node further includes a processing unit 703, configured to support the first node in performing the step of determining information by the first node in Embodiment 1, another function other than functions of the sending unit 701 and the receiving unit 702, and the like.

In hardware implementation, the foregoing processing unit 703 may be a processor, a processing circuit, or the like. The sending unit 701 may be a transmitter, a transmitter circuit, or the like. The receiving unit 702 may be a receiver, a receiver circuit, or the like. The sending unit 701 and the receiving unit 702 may form a transceiver.

FIG. 2 is a possible schematic diagram of a logical structure of a first node 200 in the foregoing embodiments according to an embodiment of this application. The first node 200 includes a processor 203. In this embodiment of this application, the processor 203 is configured to control and manage an action of the first node 200. For example, the processor 203 is configured to support a related step of determining first information by the first node 200 in this embodiment. Optionally, the first node 200 may further include a transceiver 201 and a memory 202. The transceiver 201, the memory 202, and the processor 203 may be connected to each other or may be connected to each other by using a bus structure 204. The memory 202 is configured to store code and data of the first node 200. The transceiver 201 is configured to support the first node 200 to perform communication.

In the first node shown in FIG. 2, the processor 203 may be a central processing unit, a general purpose processor, a digital signal processor, an application-specific integrated circuit, a field programmable gate array or another programmable logic device, a transistor logic device, a hardware component, or any combination thereof. The processor 203 may implement or execute various example logical blocks, modules, and circuits described with reference to content disclosed in this application. Alternatively, the processor 203 may be a combination of processors implementing a computing function, for example, a combination of one or more microprocessors, or a combination of a digital signal processor and a microprocessor.

Based on a concept the same as that of the foregoing method embodiments, an embodiment of this application further provides a second node for configuring a reference signal. The second node includes a transceiver, a memory, and a processor, to complete the method related to the second node in the foregoing method embodiments or any one of possible implementations of the method embodiments.

In the embodiments of this application, the second node may be divided into function modules based on the foregoing method examples. For example, function modules may be divided by using corresponding functions, or two or more functions may be integrated into one processing module. The foregoing integrated module may be implemented in a form of hardware, or may be implemented in a form of a software function module. It should be noted that, in the embodiments of this application, module division is merely an example, and is merely a logical function division. In an actual implementation, another division manner may be used.

When the function modules is divided by using corresponding functions, FIG. 8 is a possible schematic structural diagram of a second node in the foregoing embodiments. The second node includes a sending unit 801 and a receiving unit 802. The sending unit 801 is configured to support the second node in performing the step of sending information by the second node device in this embodiment. The receiving unit 802 is configured to support the second node in performing the step of receiving information by the second node device in this embodiment. Optionally, the second node further includes a processing unit 803, configured to support the second node in performing the step of determining information by the second node in Embodiment 1, for example, determining a target beam, another function other than functions of the sending unit 801 and the receiving unit 802, and the like.

In hardware implementation, the foregoing processing unit 803 may be a processor, a processing circuit, or the like. The sending unit 801 may be a transmitter, a transmitter circuit, or the like. The receiving unit 802 may be a receiver, a receiver circuit, or the like. The sending unit 801 and the receiving unit 802 may form a transceiver.

FIG. 3 is a possible schematic diagram of a logical structure of a second node 300 in the foregoing embodiments according to an embodiment of this application. The second node 300 includes a processor 303. In this embodiment of this application, the processor 303 is configured to control and manage an action of the second node 300. Optionally, the second node 300 may further include a transceiver 301 and a memory 302. The transceiver 301, the memory 302, and the processor 303 may be connected to each other or may be connected to each other by using a bus structure 304. The memory 302 is configured to store code and data of the second node 300. The transceiver 301 is configured to support the second node 300 to perform communication.

In the second node shown in FIG. 3, the processor 303 may be a central processing unit, a general purpose processor, a digital signal processor, an application-specific integrated circuit, a field programmable gate array or another programmable logic device, a transistor logic device, a hardware component, or any combination thereof. The processor 303 may implement or execute various example logical blocks, modules, and circuits described with reference to content disclosed in this application. Alternatively, the processor 303 may be a combination of processors implementing a computing function, for example, a combination of one or more microprocessors, or a combination of a digital signal processor and a microprocessor.

Based on a concept the same as that of the foregoing method embodiments, an embodiment of this application further provides a system for configuring a reference signal. The system includes a first node and a second node, to complete the method in the foregoing method embodiments or any one of possible implementations of the method embodiments.

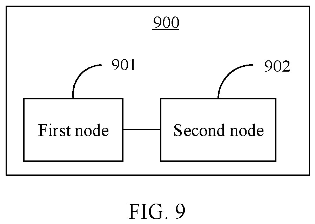

As shown in FIG. 9, an embodiment of this application further provides a system 900 for configuring a reference signal. The system 900 includes a first node 901 and a second node 902, where the first node 901 may include the structure shown in FIG. 2 or FIG. 7, and the second node 902 may include the structure shown in FIG. 3 or FIG. 8.

Based on a same concept as the foregoing method embodiments, an embodiment of this application further provides a computer-readable storage medium. The computer-readable storage medium stores code, and when the code is invoked and executed by a computer, the computer may be enabled to complete the method for configuring the reference signal related to the first node in the foregoing method embodiments or any one of possible implementations of the method embodiments. In the embodiments of this application, the computer-readable storage medium is not limited. For example, the computer-readable storage medium may be a RAM (random-access memory, random-access memory), a ROM (read-only memory, read-only memory), or the like.

Based on a concept the same as that of the foregoing method embodiments, an embodiment of this application further provides another computer-readable storage medium. The computer-readable storage medium stores code, and when the code is invoked and executed by a computer, the computer may be enabled to complete the method for configuring the reference signal related to the second node in the foregoing method embodiments or any one of possible implementations of the method embodiments. In the embodiments of this application, the computer-readable storage medium is not limited, for example, the computer-readable storage medium may be a RAM, a ROM, or the like.

Based on a concept the same as that of the foregoing method embodiments, this application further provides a computer program product. When the computer program product is invoked and executed by a computer, the computer may be enabled to complete the method related to the first node in the foregoing method embodiments or any one of possible implementations of the method embodiments.

Based on a concept the same as that of the foregoing method embodiments, this application further provides a computer program product. When the computer program product is invoked and executed by a computer, the computer may be enabled to complete the method related to the second node in the foregoing method embodiments or any one of possible implementations of the method embodiments.

Based on a concept the same as that of the foregoing method embodiments, this application further provides a chip. The chip is coupled to a transceiver, and is configured to complete the method related to the first node in the foregoing method embodiments or any one of possible implementations of the method embodiments. "Coupling" means that two components are directly or indirectly combined with each other, the combination may be fixed or movable, and the combination may allow communication of a fluid, electricity, an electrical signal, or another type of signal between the two components.

Based on a concept the same as that of the foregoing method embodiments, this application further provides a chip. The chip is coupled to a transceiver, and is configured to complete the method related to the second node in the foregoing method embodiments or any one of possible implementations of the method embodiments.

Persons skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a magnetic disk memory, a CD-ROM (read only optical disk), an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact including an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although some possible embodiments of this application is described, persons skilled in the art can make changes and modifications to the embodiments once the basic inventive concept is learnt. Therefore, the following claims are intended to be construed to cover the embodiments of this application and all changes and modifications falling within the scope of this application.

Apparently, persons skilled in the art can make various modifications and variations to this application without departing from the scope of this application. This application is intended to cover the modifications and variations of this application provided that they fall within the scope of the following claims and equivalent technologies of this application.

## Claims

1. A method for configuring a reference signal performed by a first node in a radio relay system, the radio relay system including a base station, a first user equipment, UE, served by the base station, relay nodes, and second UEs served by the relay nodes,
o wherein:
▪ the first node is the base station, the first node is connected to the first UE by an access link,
▪ a second node, being a relay node among the relay nodes, is connected to the first node by a wireless backhaul link and to one of the second UEs by an access link, and
▪ a third node, being a further relay node among the relay nodes, is connected to the second node by a wireless backhaul link and to another one of the second UEs by an access link,
o wherein the first node is an upper-level node of the second node, wherein an upper level node of a node provides a service to said node,
wherein the method comprises the steps of:
**a.)** receiving (step 401) first information from the second node, wherein the first information comprises beam information of beams used by the backhaul link between the second node and the third node; and
**b.)** sending (step 402) configuration information to the second node, wherein the configuration information is used to indicate configuration information of a reference signal received or sent by the second node on a target beam, and the target beam is at least one of those beams used by the backhaul link between the second node and the third node, wherein the first information further comprises information about a further reference signal of at least one beam among those beams used by the backhaul link between the second node and the third node, wherein the configuration information of the reference signal received or sent by the second node on the target beam comprises information indicating that there is a quasi co-location, QCL, relationship between the reference signal received or sent by the second node on the target beam and the further reference signal of the at least one beam.

2. The method according to claim 1, wherein those beams used by the backhaul link between the second node and the third node comprises: a transmit beam used by the second node to send information to the third node, or a receive beam used by the second node to receive information sent by the third node.

3. The method according to claim 1 or 2, wherein the beam information of those beams used by the backhaul link between the second node and the third node comprises at least one piece of the following information:
o a beam number;
o an identifier of a sending node of one of those beams;
o an identifier of a receiving node of one of those beams;
o a beam index, wherein the beam index corresponds to the sending node of one of those beams, the receiving node of one of those beams, and the beam number; and
o a quantity of those beams used by the backhaul link between the second node and the third node.

4. A method for configuring a reference signal performed by a second node in a radio relay system, the radio relay system including a base station, a first user equipment, UE, served by the base station, relay nodes, and second UEs served by the relay nodes,
o wherein:
▪ a first node is the base station, the first node is connected to the first UE by an access link,
▪ the second node, being a relay node among the relay nodes, is connected to the first node by a wireless backhaul link and to one of the second UEs by an access link, and
▪ a third node, being a further relay node among the relay nodes, is connected to the second node by a wireless backhaul link and to another one of the second UEs by an access link,
∘ wherein the first node is an upper-level node of the second node, wherein an upper level node of a node provides a service to said node,
wherein the method comprises the steps of:
**a.)** sending first information to the first node, wherein the first information comprises beam information of beams used by the backhaul link between the second node and the third node;
**b.)** receiving (step 403) configuration information from the first node, wherein the configuration information is used to indicate configuration information of a reference signal received or sent by the second node on a target beam, the target beam is at least one of those beams used by the backhaul link between the second node and the third node; and
**c.)** receiving or sending (step 404) the reference signal on the target beam, wherein the first information further comprises information about a further reference signal of at least one beam among those beams used by the backhaul link between the second node and the third node, wherein the configuration information of the reference signal received or sent by the second node on the target beam comprises information indicating that there is a quasi co-location, QCL, relationship between the reference signal received or sent by the second node on the target beam and the further reference signal of the at least one beam; and
the receiving or sending the reference signal on the target beam comprises:
o receiving or sending, on the target beam, the reference signal that has the quasi co-location, QCL, relationship with the further reference signal of the at least one beam.

5. The method according to claim 4, wherein those beams used by the backhaul link between the second node and the third node comprises: a transmit beam used by the second node to send information to the third node, or a receive beam used by the second node to receive information sent by the third node.

6. The method according to any one of claims 4 to 5, wherein the beam information of those beams used by the backhaul link between the second node and the third node comprises at least one piece of the following information:
o information about a beam number;
o an identifier of a sending node of one of those beams;
o an identifier of a receiving node of one of those beams;
o a beam index, wherein the beam index corresponds to the sending node of one of those beams, the receiving node of one of those beams, and the beam number; and
o a quantity of those beams used by the link between the second node and the third node.

7. A first node for configuring a reference signal, configured to perform the method according to any one of claims 1 to 3.

8. A second node for configuring a reference signal, configured to perform the method according to any one of claims 4 to 6.

9. A computer-readable storage medium, wherein the computer-readable storage medium stores code; and when the code is invoked and executed by a computer of a first node, the computer performs the method according to any one of claims 1 to 3.

10. A computer-readable storage medium, wherein the computer-readable storage medium stores code; and when the code is invoked and executed by a computer of a second node, the computer performs the method according to any one of claims 4 to 6.

11. A computer program product, wherein when the computer program product is invoked and executed by a computer of a first node, the computer performs the method according to any one of claims 1 to 3.

12. A computer program product, wherein when the computer program product is invoked and executed by a computer of a second node, the computer performs the method according to any one of claims 4 to 6.

## Patentansprüche

1. Verfahren zum Konfigurieren eines Referenzsignals, das durch einen ersten Knoten in einem Funkrelaissystem ausgeführt wird, wobei das Funkrelaissystem eine Basisstation, eine erste Benutzereinrichtung UE, die durch die Basisstation versorgt wird, Relaisknoten und zweite UE, die durch die Relaisknoten versorgt werden, umfasst,
o wobei
▪ der erste Knoten die Basisstation ist und der erste Knoten durch eine Zugangsverbindung mit der ersten UE verbunden ist,
▪ ein zweiter Knoten, der ein Relaisknoten unter den Relaisknoten ist, durch eine drahtlose Backhaul-Verbindung mit dem ersten Knoten und durch eine Zugangsverbindung mit einer der zweiten UE verbunden ist, und
▪ ein dritter Knoten, der ein weiterer Relaisknoten unter den Relaisknoten ist, durch eine drahtlose Backhaul-Verbindung mit dem zweiten Knoten und durch eine Zugangsverbindung mit einer anderen der zweiten UE verbunden ist,
o wobei der erste Knoten ein Obere-Ebene-Knoten des zweiten Knotens ist, wobei ein Oberer-Ebene-Knoten eines Knotens dem Knoten einen Dienst bereitstellt, wobei das Verfahren die folgenden Schritte umfasst:
**a.)** Empfangen (Schritt 401) von ersten Informationen von dem zweiten Knoten, wobei die ersten Informationen Strahlinformationen von Strahlen umfassen, die durch die Backhaul-Verbindung zwischen dem zweiten Knoten und dem dritten Knoten verwendet werden; und
**b.)** Senden (Schritt 402) von Konfigurationsinformationen zu dem zweiten Knoten, wobei die Konfigurationsinformationen verwendet werden, um Konfigurationsinformationen eines durch den zweiten Knoten auf einem Zielstrahl empfangenen oder gesendeten Referenzsignals anzugeben, und der Zielstrahl mindestens einer der Strahlen ist, die durch die Backhaul-Verbindung zwischen dem zweiten Knoten und dem dritten Knoten verwendet werden, wobei die ersten Informationen ferner Informationen über ein weiteres Referenzsignal mindestens eines Strahls unter den Strahlen, die durch die Backhaul-Verbindung zwischen dem zweiten Knoten und dem dritten Knoten verwendet werden, umfassen, wobei die Konfigurationsinformationen des durch den zweiten Knoten auf dem Zielstrahl empfangenen oder gesendeten Referenzsignals Informationen umfassen, die angeben, dass es eine quasi Kolokalisierungs- bzw. QCL-Beziehung zwischen dem durch den zweiten Knoten auf dem Zielstrahl empfangenen oder gesendeten Referenzsignal und dem weiteren Referenzsignal des mindestens einen Strahls gibt.

2. Verfahren nach Anspruch 1, wobei die Strahlen, die durch die Backhaul-Verbindung zwischen dem zweiten Knoten und dem dritten Knoten verwendet werden, Folgendes umfassen: einen durch den zweiten Knoten zum Senden von Informationen zu dem dritten Knoten verwendeten Sendestrahl oder einen durch den zweiten Knoten zum Empfangen von durch den dritten Knoten gesendeten Informationen verwendeten Empfangsstrahl.

3. Verfahren nach Anspruch 1 oder 2, wobei die Strahlinformationen der Strahlen, die durch die Backhaul-Verbindung zwischen dem zweiten Knoten und dem dritten Knoten verwendet werden, mindestens ein Element der folgenden Informationen umfassen:
o eine Strahlnummer;
o eine Kennung eines sendenden Knotens eines dieser Strahlen;
o eine Kennung eines empfangenden Knotens eines dieser Strahlen;
o einen Strahlindex, wobei der Strahlindex dem sendenden Knoten eines dieser Strahlen, dem empfangenden Knoten eines dieser Strahlen und der Strahlnummer entspricht; und
o eine Anzahl der durch die Backhaul-Verbindung zwischen dem zweiten Knoten und dem dritten Knoten verwendeten Strahlen.

4. Verfahren zum Konfigurieren eines Referenzsignals, das durch einen zweiten Knoten in einem Funkrelaissystem ausgeführt wird, wobei das Funkrelaissystem eine Basisstation, eine erste Benutzereinrichtung UE, die durch die Basisstation versorgt wird, Relaisknoten und zweite UE, die durch die Relaisknoten versorgt werden, umfasst,
o wobei
▪ ein erster Knoten die Basisstation ist und der erste Knoten durch eine Zugangsverbindung mit der ersten UE verbunden ist,
▪ der zweite Knoten, der ein Relaisknoten unter den Relaisknoten ist, durch eine drahtlose Backhaul-Verbindung mit dem ersten Knoten und durch eine Zugangsverbindung mit einer der zweiten UE verbunden ist, und
▪ ein dritter Knoten, der ein weiterer Relaisknoten unter den Relaisknoten ist, durch eine drahtlose Backhaul-Verbindung mit dem zweiten Knoten und durch eine Zugangsverbindung mit einer anderen der zweiten UE verbunden ist,
o wobei der erste Knoten ein Obere-Ebene-Knoten des zweiten Knotens ist, wobei ein Oberer-Ebene-Knoten eines Knotens dem Knoten einen Dienst bereitstellt, wobei das Verfahren die folgenden Schritte umfasst:
**a.)** Senden von ersten Informationen zu dem ersten Knoten, wobei die ersten Informationen Strahlinformationen von Strahlen umfassen, die durch die Backhaul-Verbindung zwischen dem zweiten Knoten und dem dritten Knoten verwendet werden;
**b.)** Empfangen (Schritt 403) von Konfigurationsinformationen von dem ersten Knoten, wobei die Konfigurationsinformationen verwendet werden, um Konfigurationsinformationen eines durch den zweiten Knoten auf einem Zielstrahl empfangenen oder gesendeten Referenzsignals anzugeben, wobei der Zielstrahl mindestens einer der Strahlen ist, die durch die Backhaul-Verbindung zwischen dem zweiten Knoten und dem dritten Knoten verwendet werden; und
**c.)** Empfangen oder Senden (Schritt 404) des Referenzsignals auf dem Zielstrahl, wobei die ersten Informationen ferner Informationen über ein weiteres Referenzsignal mindestens eines Strahls unter den Strahlen, die durch die Backhaul-Verbindung zwischen dem zweiten Knoten und dem dritten Knoten verwendet werden, umfassen, wobei die Konfigurationsinformationen des durch den zweiten Knoten auf dem Zielstrahl empfangenen oder gesendeten Referenzsignals Informationen umfassen, die angeben, dass es eine quasi Kolokalisierungs- bzw. QCL-Beziehung zwischen dem durch den zweiten Knoten auf dem Zielstrahl empfangenen oder gesendeten Referenzsignal und dem weiteren Referenzsignal des mindestens einen Strahls gibt; und
das Empfangen oder Senden des Referenzsignals auf dem Zielstrahl Folgendes umfasst:
o Empfangen oder Senden des Referenzsignals, das die quasi Kolokalisierungs- bzw. QCL-Beziehung mit dem weiteren Referenzsignal des mindestens einen Strahls aufweist, auf dem Zielstrahl.

5. Verfahren nach Anspruch 4, wobei die Strahlen, die durch die Backhaul-Verbindung zwischen dem zweiten Knoten und dem dritten Knoten verwendet werden, Folgendes umfassen: einen durch den zweiten Knoten zum Senden von Informationen zu dem dritten Knoten verwendeten Sendestrahl oder einen durch den zweiten Knoten zum Empfangen von durch den dritten Knoten gesendeten Informationen verwendeten Empfangsstrahl.

6. Verfahren nach einem der Ansprüche 4 bis 5, wobei die Strahlinformationen der Strahlen, die durch die Backhaul-Verbindung zwischen dem zweiten Knoten und dem dritten Knoten verwendet werden, mindestens ein Element der folgenden Informationen umfassen:
o Informationen über eine Strahlnummer;
o eine Kennung eines sendenden Knotens eines dieser Strahlen;
o eine Kennung eines empfangenden Knotens eines dieser Strahlen;
o einen Strahlindex, wobei der Strahlindex dem sendenden Knoten eines dieser Strahlen, dem empfangenden Knoten eines dieser Strahlen und der Strahlnummer entspricht; und
o eine Anzahl der durch die Verbindung zwischen dem zweiten Knoten und dem dritten Knoten verwendeten Strahlen.

7. Erster Knoten zum Konfigurieren eines Referenzsignals, der dafür ausgelegt ist, das Verfahren nach einem der Ansprüche 1 bis 3 auszuführen.

8. Zweiter Knoten zum Konfigurieren eines Referenzsignals, der dafür ausgelegt ist, das Verfahren nach einem der Ansprüche 4 bis 6 auszuführen.

9. Computerlesbares Speicherungsmedium, wobei das computerlesbare Speicherungsmedium Code speichert; und wenn der Code durch einen Computer eines ersten Knotens aufgerufen und ausgeführt wird, der Computer das Verfahren nach einem der Ansprüche 1 bis 3 ausführt.

10. Computerlesbares Speicherungsmedium, wobei das computerlesbare Speicherungsmedium Code speichert, und wenn der Code durch einen Computer eines zweiten Knotens aufgerufen und ausgeführt wird, der Computer das Verfahren nach einem der Ansprüche 4 bis 6 ausführt.

11. Computerprogrammprodukt, wobei, wenn das Computerprogrammprodukt durch einen Computer eines ersten Knotens aufgerufen und ausgeführt wird, der Computer das Verfahren nach einem der Ansprüche 1 bis 3 ausführt.

12. Computerprogrammprodukt, wobei, wenn das Computerprogrammprodukt durch einen Computer eines zweiten Knotens aufgerufen und ausgeführt wird, der Computer das Verfahren nach einem der Ansprüche 4 bis 6 ausführt.

## Revendications

1. Procédé pour configurer un signal de référence, effectué par un premier noeud dans un système de relais radio, le système de relais radio contenant une station de base, un premier équipement utilisateur, UE, desservi par la station de base, des noeuds de relais et des deuxièmes UE desservis par les noeuds de relais,
o dans lequel :
▪ le premier noeud est la station de base, le premier noeud est connecté au premier UE par une liaison d'accès,
a un deuxième noeud, qui est un noeud de relais parmi les noeuds de relais, est connecté au premier noeud par une liaison de raccordement sans fil et à l'un des deuxièmes UE par une liaison d'accès, et
a un troisième noeud, qui est un autre noeud de relais parmi les noeuds de relais, est connecté au deuxième noeud par une liaison de raccordement sans fil et à un autre des deuxièmes UE par une liaison d'accès,
o dans lequel le premier noeud est un noeud de niveau supérieur du deuxième noeud, dans lequel un noeud de niveau supérieur d'un noeud offre un service audit noeud, le procédé comprenant les étapes consistant à :
a.) recevoir (étape 401) des premières informations provenant du deuxième noeud, les premières informations comprenant des informations de faisceau concernant les faisceaux utilisés par la liaison de raccordement entre le deuxième noeud et le troisième noeud ; et
b.) envoyer (étape 402) des informations de configuration au deuxième noeud, les informations de configuration étant utilisées pour indiquer des informations de configuration d'un signal de référence reçu ou envoyé par le deuxième noeud sur un faisceau cible, et le faisceau cible étant au moins un de ces faisceaux utilisés par la liaison de raccordement entre le deuxième noeud et le troisième noeud, les premières informations comprenant également des informations concernant un autre signal de référence d'au moins un faisceau parmi ces faisceaux utilisés par la liaison de raccordement entre le deuxième noeud et le troisième noeud, les informations de configuration du signal de référence reçu ou envoyé par le deuxième noeud sur le faisceau cible comprenant des informations indiquant qu'il existe une relation de quasi co-localisation, QCL, entre le signal de référence reçu ou envoyé par le deuxième noeud sur le faisceau cible et l'autre signal de référence de l'au moins un faisceau.

2. Procédé selon la revendication 1, dans lequel ces faisceaux utilisés par la liaison de raccordement entre le deuxième noeud et le troisième noeud comprennent : un faisceau de transmission utilisé par le deuxième noeud pour envoyer des informations au troisième noeud, ou un faisceau de réception utilisé par le deuxième noeud pour recevoir des informations envoyées par le troisième noeud.

3. Procédé selon la revendication 1 ou 2, dans lequel les informations de faisceau de ces faisceaux utilisés par la liaison de raccordement entre le deuxième noeud et le troisième noeud comprennent au moins une information parmi les informations suivantes :
o un numéro de faisceau ;
o un identifiant d'un noeud d'envoi d'un de ces faisceaux ;
o un identifiant d'un noeud de réception d'un de ces faisceaux ;
o un indice de faisceau, l'indice de faisceau correspondant au noeud d'envoi d'un de ces faisceaux, au noeud de réception d'un de ces faisceaux et au numéro de faisceau ;
et
o une quantité de ces faisceaux utilisée par la liaison de raccordement entre le deuxième noeud et le troisième noeud.

4. Procédé pour configurer un signal de référence, effectué par un deuxième noeud dans un système de relais radio, le système de relais radio contenant une station de base, un premier équipement utilisateur, UE, desservi par la station de base, des noeuds de relais et des deuxièmes UE desservis par les noeuds de relais,
o dans lequel :
a un premier noeud est la station de base, le premier noeud est connecté au premier UE par une liaison d'accès,
▪ le deuxième noeud, qui est un noeud de relais parmi les noeuds de relais, est connecté au premier noeud par une liaison de raccordement sans fil et à l'un des deuxièmes UE par une liaison d'accès, et
a un troisième noeud, qui est un autre noeud de relais parmi les noeuds de relais, est connecté au deuxième noeud par une liaison de raccordement sans fil et à un autre des deuxièmes UE par une liaison d'accès,
o dans lequel le premier noeud est un noeud de niveau supérieur du deuxième noeud, dans lequel un noeud de niveau supérieur d'un noeud offre un service audit noeud, le procédé comprenant les étapes consistant à :
a.) envoyer des premières informations au premier noeud, les premières informations comprenant des informations de faisceau concernant les faisceaux utilisés par la liaison de raccordement entre le deuxième noeud et le troisième noeud ;
b.) recevoir (étape 403) des informations de configuration provenant du premier noeud, les informations de configuration étant utilisées pour indiquer des informations de configuration d'un signal de référence reçu ou envoyé par le deuxième noeud sur un faisceau cible, le faisceau cible étant au moins un de ces faisceaux utilisés par la liaison de raccordement entre le deuxième noeud et le troisième noeud ; et
c.) recevoir ou envoyer (étape 404) le signal de référence sur le faisceau cible, les premières informations comprenant également des informations concernant un autre signal de référence d'au moins un faisceau parmi ces faisceaux utilisés par la liaison de raccordement entre le deuxième noeud et le troisième noeud, les informations de configuration du signal de référence reçu ou envoyé par le deuxième noeud sur le faisceau cible comprenant des informations indiquant qu'il existe une relation de quasi co-localisation, QCL, entre le signal de référence reçu ou envoyé par le deuxième noeud sur le faisceau cible et l'autre signal de référence de l'au moins un faisceau ; et
la réception ou l'envoi du signal de référence sur le faisceau cible consistant à :
o recevoir ou envoyer, sur le faisceau cible, le signal de référence qui a la relation de quasi co-localisation, QCL, avec l'autre signal de référence de l'au moins un faisceau.

5. Procédé selon la revendication 4, dans lequel ces faisceaux utilisés par la liaison de raccordement entre le deuxième noeud et le troisième noeud comprennent : un faisceau de transmission utilisé par le deuxième noeud pour envoyer des informations au troisième noeud, ou un faisceau de réception utilisé par le deuxième noeud pour recevoir des informations envoyées par le troisième noeud.

6. Procédé selon l'une quelconque des revendications 4 et 5, dans lequel les informations de faisceau de ces faisceaux utilisés par la liaison de raccordement entre le deuxième noeud et le troisième noeud comprennent au moins une information parmi les informations suivantes :
o des informations concernant un numéro de faisceau ;
o un identifiant d'un noeud d'envoi d'un de ces faisceaux ;
o un identifiant d'un noeud de réception d'un de ces faisceaux ;
o un indice de faisceau, l'indice de faisceau correspondant au noeud d'envoi d'un de ces faisceaux, au noeud de réception d'un de ces faisceaux et au numéro de faisceau ; et
o une quantité de ces faisceaux utilisée par la liaison entre le deuxième noeud et le troisième noeud.

7. Premier noeud utilisé pour configurer un signal de référence, configuré pour effectuer le procédé selon l'une quelconque des revendications 1 à 3.

8. Deuxième noeud utilisé pour configurer un signal de référence, configuré pour effectuer le procédé selon l'une quelconque des revendications 4 à 6.

9. Support de stockage lisible par ordinateur, le support de stockage lisible par ordinateur stockant un code ; et lorsque le code est appelé et exécuté par un ordinateur d'un premier noeud, l'ordinateur effectuant le procédé selon l'une quelconque des revendications 1 à 3.

10. Support de stockage lisible par ordinateur, le support de stockage lisible par ordinateur stockant un code ; et lorsque le code est appelé et exécuté par un ordinateur d'un deuxième noeud, l'ordinateur effectuant le procédé selon l'une quelconque des revendications 4 à 6.

11. Produit-programme d'ordinateur, lorsque le produit-programme d'ordinateur est appelé et exécuté par un ordinateur d'un premier noeud, l'ordinateur effectuant le procédé selon l'une quelconque des revendications 1 à 3.

12. Produit-programme d'ordinateur, lorsque le produit-programme d'ordinateur est appelé et exécuté par un ordinateur d'un deuxième noeud, l'ordinateur effectuant le procédé selon l'une quelconque des revendications 4 à 6.
